(19) Europäisches Patentamt
European Patent Office
Office européen des brevets

(11) Numéro de publication : **0 074 913**
**B1**

# (12) FASCICULE DE BREVET EUROPÉEN

(45) Date de publication du fascicule du brevet : **20.08.86**

(51) Int. Cl.⁴ : **C 08 L 83/04**, D 21 H 1/40

(21) Numéro de dépôt : **82420111.5**

(22) Date de dépôt : **30.07.82**

(54) **Compositions sans solvant à base d'organopolysiloxane hydroxysilylé et d'agent réticulant à groupement polyalkoxysilylé catalysées par les dérivés organiques du fer et du zirconium - utilisation des compositions pour le revêtement ou l'imprégnation de matériaux à base d'amiante ou de dérivés cellulosiques ou synthétiques.**

(30) Priorité : **12.08.81 FR 8115787**

(43) Date de publication de la demande :
**23.03.83 Bulletin 83/12**

(45) Mention de la délivrance du brevet :
**20.08.86 Bulletin 86/34**

(84) Etats contractants désignés :
**BE CH DE GB IT LI NL SE**

(56) Documents cités :
**FR-A- 2 108 040**
**FR-A- 2 292 744**
**GB-A- 773 347**
**US-A- 3 305 502**
**US-A- 3 474 069**
**US-A- 3 861 939**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Fau, Alain**
**18, Chemin du Grand Bois**
**F-69160 Tassin la Demi Lune (FR)**
Inventeur : **Nicou, Parasko**
**3, rue des Primevères**
**F-69340 Francheville (FR)**

(74) Mandataire : **Chichery, Guy et al**
**RHONE-POULENC INTERSERVICES Service Brevets Chimie Centre de Recherches de Saint-Fons B.P. 62**
**F-69192 Saint-Fons Cédex (FR)**

**EP 0 074 913 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention a pour objet des compositions organosiliciques sans solvant, comprenant au moins un composé organopolysiloxanique, à groupement hydroxysilylé et un agent réticulant, à groupements alkoxysilylés. Ces compositions sont utilisables, notamment, pour conférer des propriétés hydrofugeantes à des matériaux divers, tels que l'amiante, ou les dérivés cellulosiques ou les matières synthétiques. Elles permettent, en outre, d'obtenir de bonnes propriétés d'antiadhérence. Les compositions selon l'invention ouvrent, de ce fait, la voie pour la fabrication de revêtements papiers antiadhérents, ainsi que des joints pour diverses industries, telle que l'industrie automobile.

Des compositions organosiliciques sans solvants ont déjà été proposées pour le traitement de substances diverses, telles que le papier et des feuilles en matière plastique ; ces compositions comportent, généralement, des diorganopolysiloxanes de faible viscosité, portant en bout de chaîne des radicaux hydroxyles et des radicaux vinyles, et des organohydrogénopolysiloxanes portant éventuellement des groupes vinyles, des catalyseurs à base de platine ou de dérivés du platine (demande française 2 283 934 et sa première addition 2 318 204, demandes françaises 2 183 125, 2 209 607, 2 294 765 et 2 307 025). Elles durcissent rapidement à la surface des matériaux sur lesquels elles ont été déposées en couches minces et forment des revêtements dont l'antiadhérence est souvent satisfaisante.

Ces compositions présentent l'avantage sur celles employées en solution, qui sont habituellement diluées dans au moins 5 fois leur poids de solvant (demande française 2 273 835), d'éviter la mise en place déquipements, parfois dangereux et toujours coûteux et encombrants, de récupération des solvants. Toutefois, les revêtements obtenus présentent des limitations quant à leur utilisation et leur usage pour la protection des produits alimentaires n'est pas à ce jour universellement autorisé par les diverses législations nationales. Par ailleurs, on a constaté des phénomènes d'inhibition notamment, vis-à-vis de dérivés métalliques contenus dans les matériaux à traiter. Ce dernier aspect revêt une grande importance lors de la fabrication de joints pour l'industrie automobile.

L'utilisation de sels organiques détain comme catalyseurs de compositions sans solvant comportant des diorganopolysiloxanes bloqués en bout de chaîne par des radicaux hydroxyles et des organohydrogénopolysiloxanes (demande française 2 291 254) n'apporte pas les améliorations souhaitées. En effet, ces sels présentent d'une part une toxicité non négligeable et en outre ont tendance à faire gélifier très rapidement, à la température ambiante, les compositions qu'ils catalysent lors de la mise en place de celles-ci dans les bacs d'enduction des machines industrielles.

On sait également que l'on a proposé diverses compositions organosiliciques destinées à être utilisées pour imprégner à cœur, ou pour faire des revêtements sur des matériaux composites comprenant par un exemple une partie métallique et des revêtements de fibre ambiante. Il s'agit, en général, de compositions organosiliciques réticulables à chaud, sous l'action de peroxydes et qui permettent d'obtenir des joints divers, utilisables notamment dans l'industrie automobile. Il s'avère cependant difficile d'obtenir, par cette technique, des revêtements très minces. Par ailleurs, il est difficile d'obtenir des joints épais ayant de très bonnes propriétés de surface.

On observe, alors qu'on ne savait pas conférer, de manière satisfaisante, des propriétés hydrofugeantes et d'antiadhérence à des matériaux divers, tels que l'amiante, les dérivés cellulosiques ou les matières sunthétiques, en mettant en œuvre des compositions organosiliciques sans solvant, stables à la température ambiante et comprenant, au moins, un organopolysiloxane à groupement hydroxysilylé et un agent réticulant à groupement alkoxysilylé. La présente invention répond précisement à ce but.

Il a été maintenant trouvé et c'est ce qui constitue l'objet de la présente invention des compositions organopolysiloxaniques de revêtement et d'imprégnation comprenant :

un polydiorganopolysiloxane α,ω-dihydroxylé (polymère A), de viscosité mesurée à 25 °C comprise entre 5 et 100.000 mPa · s constitué essentiellement de motifs de formule $Z_2SiO$, dans laquelle les symboles Z, identiques ou différents, représentent :

des radicaux alcoyles ou halogénoalcoyles ayant de 1 à 8 atomes de carbone et comportant de 1 à 7 atomes de chlore et/ou de fluor,

des radicaux alcényles ayant de 2 à 4 atomes de carbone,

des radicaux cycloalcoyles ou halogénocycloalcoyles ayant de 3 à 8 atomes de carbone et contenant de 1 à 4 atomes de chlore et/ou de fluor,

des radicaux aryles, alcoylaryles et halogénoaryles ayant de 6 à 8 atomes de carbone et contenant de 1 à 4 atomes de chlore et/ou de fluor,

des radicaux cyanoalkyles ayant de 3 à 4 atomes de carbone.

un polyorganopolysiloxane (polymère B) ayant de 1,60 à 1,90 radical organique par atome de silicium, de viscosité allant de 30 mPa · s à 25 °C à 3 000 mPa · s à 25 °C, ayant de 0,2 à 10 % de groupes hydroxyles, constitué de motifs choisis parmi ceux de formules $RSiO_{1,5}$, $R_2SiO$ et $R_3SiO_{0,5}$, dans lesquelles les symboles R, identiques ou différents, représentent :

des radicaux alcoyles ou halogénoalcoyles ayant de 1 à 8 atomes de carbone et comportant de 1 à 7 atomes de chlore et/ou de fluor,

des radicaux alcényles ayant de 2 à 4 atomes de carbone,

des radicaux cycloalcoyles ou halogénocycloalcoyles ayant de 3 à 8 atomes de carbone et contenant de 1 à 4 atomes de chlore et/ou de fluor,

des radicaux aryles, alcoylaryles et halogénoaryles ayant de 6 à 8 atomes de carbone et contenant de 1 à 4 atomes de chlore et/ou de fluor,

des radicaux cyanoalkyles ayant de 3 à 4 atomes de carbone,

un agent réticulant à groupement polyalkoxysilylé,

un catalyseur,

les compositions étant caractérisées en ce que le catalyseur est un dérivé organique du fer ou du zirconium introduit, sous forme d'une solution, dans un solvant organique compatible avec le milieu organopolysiloxanique, et en ce que les compositions sont exemptes de charges permettant de renforcer les propriétés mécaniques.

Il a été constaté que de telles compositions permettaient, en choisissant, de manière appropriée, les divers constituants, et que l'on définira plus loin, d'obtenir des papiers utilisables en industrie alimentaire et présentant de bonnes propriétés anti-adhérentes ainsi que des joints à base de matériaux fibreux, tels que l'amiante, et particulièrement remarquables par leur caractère hydrofugeant, élastomérique, leurs propriétés mécaniques et leur tenue à l'eau et aux hydrocarbures.

Plus précisemment, les dérivés organiques du fer ou du zirconium sont des sels d'acides carboxyliques, des chelates ou des complexes organométalliques.

Il peut s'agir de tous sels d'acide aliphatique, cycloaliphatique ou aromatique comportant, en général, au plus 12 atomes de carbone. Parmi les acides carboxyliques, on peut citer, l'acide acétique, l'acide propionique, l'acide benzoïque et l'acide naphtoïque.

Avantageusement, on utilisera des chelates ou des complexes organiques du fer, divalent ou trivalent, ou encore des chelates et complexes organométalliques du zirconium. Les compositions organosiliciques, selon l'invention et qui contiennent de tels systèmes catalytiques sont particulièrement remarquables, en ce sens, qu'elles ont une bonne stabilité à température ambiante.

Tout chélate ou complexe organique du fer ou du zirconium peut convenir, bien entendu, à condition que sa solubilité ne soit pas nulle dans le milieu organopolysiloxanique.

Préférentiellement, on utilisera, en tant que catalyseur, des complexes organométalliques du fer trivalent répondant à la formule globale suivante :

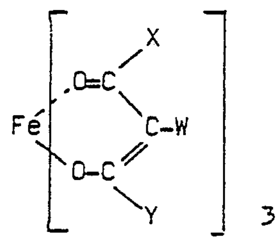

dans laquelle le symbole X représente un atome d'hydrogène, un radical alcoyle ayant de 1 à 4 atomes de carbone tel qu'un radical méthyle, éthyle, n-propyle, n-butyle, un radical phényle, un radical alkoxyle ayant de 1 à 3 atomes de carbone tel qu'un radical méthoxyle, éthoxyle, n-propoxyle, le symbole W représente un atome d'hydrogène, un radical méthyle, un radical acétyle, le symbole Y représente un radical méthyle, un radical phényle. Ces complexes sont préparés, selon les procédés connus, par réaction de dérivés du fer trivalent, en particulier le chlorure ferrique, avec des composés énolisables choisis parmi les β-dicétones et les β-cétoesters.

A titre d'exemples de β-dicétones peuvent être mentionnées celles répondant aux formules ci-après :

$CH_3—CO—CH_2COCH_3$, $CH_3CH_2COCH_2COCH_3$,
$CH_3CO—CH—(CH_3)—COCH_3$, $CH_3CO—CH(COCH_3)—CO—CH_3$,
$C_6H_5COCH_2COCH_3$

A titre d'exemples de β-cétoesters peuvent être mentionnés ceux répondant aux formules ci-après :

$CH_3CO—CH_2COOCH_3$, $CH_3COCH_2COOC_2H_5$,
$C_6H_5COCH_2COOC_2H_5$, $C_6H_5COCH_2COOCH_3$

A titre illustratif des complexes du fer utilisables dans le cadre de la présente invention, on citera ceux qui ont pour formule :

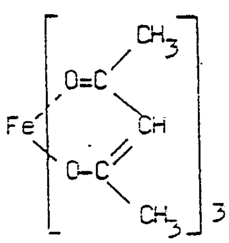

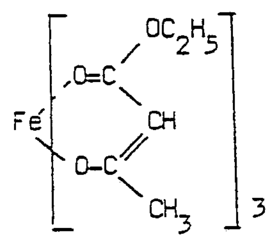

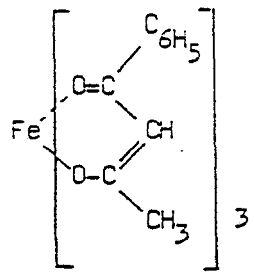

Avantageusement, le catalyseur est introduit dans le milieu organopolysiloxanique sous forme d'une solution dans un solvant organique compatible avec ledit milieu organopolysiloxanique. Parmi les solvants ou mélange de solvants, on utilisera de manière générale :

(i) les dérivés des monoéthylèneglycols de formule $TO—CH_2CH_2OT$ dans laquelle les symboles T, identiques ou différents, représentent des radicaux de formule $CH_3CO$, des radicaux méthyle, éthyle, n-propyle, n-butyle

(ii) les dérivés des diéthylèneglycols de formule $T'O(CH_2CH_2O)T'$, dans laquelle les symboles T', identiques ou différents, représentent des radicaux de formule $CH_3CO$, des radicaux méthyle, éthyle (étant entendu que les symboles R' ne peuvent pas représenter simultanément des radicaux $CH_3CO$), liquides à la température ambiante.

(3i) les hydrocarbures aromatiques de formule :

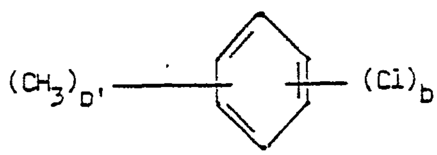

dans laquelle le symbole b représente 1 ou 2, le symbole b' représente zéro ou 1.

Les compositions organosiliciques, selon l'invention, qui contiennent en tant que système catalytique un chélate ou un complexe organique du fer ou du zirconium et, en particulier, le complexe ferrique :

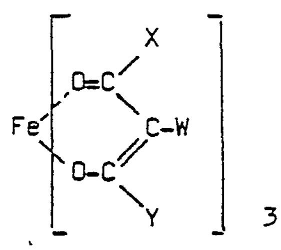

l'entité catalytique étant introduite dans un solvant ou un mélange de solvant constitué par les dérivés de monoéthylèneglycol, les dérivés de diéthylèneglycol, les hydrocarbures aromatiques tels que précédemment définis, constituent un objet préférentiel selon l'invention. Ces compositions sont particulièrement remarquables par leur très bonnes stabilité, à température ambiante, et par leur bonnes propriétés qu'elles confèrent, après imprégnation ou enduction, puis durcissement aux divers matériaux préalablement définis.

Parmi les dérivés de monoéthylèneglycol, on citera les dérivés ayant les formules ci-après :

$CH_3OCH_2CH_2OCH_3$, $CH_3OCH_2CH_2OC_2H_5$,
$C_2H_5—OCH_2OC_2H_5$,
$n.C_4H_9OCH_2O_nC_4H_9$,
$CH_3COOCH_2OCH_3$, $CH_3COOCH_2CH_2CH_2CH_2OC_2H_5$,
$CH_3COOCH_2CH_2CH_2O(nC_3H_7)$, $CH_3COOCH_2CH_2OCOCH_3$

Parmi les dérivés des diéthylèneglycols, on mentionnera les dérivés ayant les formules ci-après :

$CH_3O(CH_2CH_2O)_2CH_3$, $C_2H_5O(CH_2CH_2O)_2CH_3$,
$C_2H_5O(CH_2CH_2O)_2C_2H_5$, $CH_3COO(CH_2CH_2O)CH_3$,
$CH_3COO(CH_2CH_2O)_2C_2H_5$.

Parmi les hydrocarbures aromatiques, liquides à la température ambiante, on mentionnera les hydrocarbures suivants : le chlorobenzène, l'orthodichlorobenzène, le chloro-2 méthyl-1 benzène, le chloro-4 méthyl-1 benzène.

Les polymères diorganopolysiloxaniques A) à groupes hydroxyles terminaux sont des huiles ou des

gommes, de viscosité allant de 5 mPa · s à 25 °C à 100 000 mPa · s à 25 °C, de préférence de 10 mPa · s à 25 °C à 50 000 mPa · s à 25 °C ; ils sont constitués essentiellement, comme déjà indiqué, de motifs diorganosiloxy de formule $Z_2SiO$, cependant la présence de motifs de formule $SiO_2$ et/ou $ZSiO_{1,5}$ n'est pas exclue dans la proportion d'au plus 1 % du nombre des motifs $Z_2SiO$.

A titre illustratif, peuvent être cités parmi les radicaux Z :

les radicaux méthyle, éthyle, propyle, isopropyle, butyle, pentyle, hexyle, éthyl-2-hexyle, octyle, chlorométhyle, dichlorométhyle, α-chloroéthyle, α,β-dichloroéthyle, fluorométhyle, difluorométhyle, α,β-difluoroéthyle, trifluoro-3,3,3-propyle, trifluoro-4,4,4-butyle, pentafluoro-4,4,4,3,3-butyle, heptafluoro-3,3,3,4,4,5,5-pentyle.

les radicaux vinyle, allyle, butène-2-yle.

les radicaux cyclopentyle, cyclohexyle, méthylcyclohexyle, difluoro-2,3-cyclobutyle, difluoro-3,4-méthyl-5-cycloheptyle.

les radicaux phényle, tolyle, xylyle, chlorophényle, dichlorophényle, trichlorophényle.

les radicaux β-cyanoéthyle et α-cyanopropyle.

Pour obtenir des revêtements ayant de bonnes propriétés d'antiadhérence, on mettra en œuvre des compositions organosiliciques dont le polydiorganopolysiloxane α,ω-dihydroxylé est essentiellement constitué de motifs $Z_2SiO$, les symboles Z identiques ou différents représentant des radicaux méthyle, éthyle, n-propyle, vinyle, phényle, au moins 85 % de ces radicaux sont des radicaux méthyle, au plus 10 % de ces radicaux sont des radicaux phényle et au plus 5 % de ces radicaux sont des radicaux vinyle.

Enfin, à titre préférentiel, on utilise en tant que polymère A) des huiles polydiméthylpolysiloxaniques α,ω dihydroxylées.

Les polymères A) sont commercialisés par les fabricants de silicones et leurs techniques de fabrication sont bien connues. L'une des techniques les plus courantes consiste, dans une première phase, à polymériser des diorganocyclopolysiloxanes, à l'aide de quantités catalytiques d'agents alcalins ou acides, puis à traiter les polymérisats avec des quantités calculées d'eau (brevets français 1 134 005, 1 198 749, 1 226 745), les quantités d'eau introduites étant d'autant plus élevées que les polymères à préparer ont une viscosité plus faible. Ensuite, dans une deuxième phase, les polymères sont isolés en éliminant, à une température en générale supérieure à 100 °C et sous une pression de préférence inférieure à la pression atmosphérique, les diorganocyclopolysiloxanes de départ équilibrant la réaction, ainsi que les autres polymères de poids moléculaire peu élevé, formés lors de cette réaction. Il est nécessaire, avant de distiller les produits volatils, de neutraliser les agents alcalins ou acides utilisés comme catalyseurs de polymérisation.

Les polymères organopolysiloxaniques B) sont des polymères ramifiés ayant de 1,60 à 1,95 radical organique par atome de silicium, de préférence 1,65 à 1,90, de viscosité allant de 30 mPa · s à 25 °C à 3 000 mPa · s à 25 °C, de préférence allant de 40 mPa · s à 2 000 mPa · s à 25 °C, et renfermant de 0,2 à 10 % de groupes hydroxyles, de préférence de 0,5 à 6 %. Ces polymères peuvent être préparés par hydrolyse de mélanges constitués d'halogénosilanes choisis parmi ceux de formules $RSiCl_3$, $R_2SiCl_2$ et $R_3SiCl$ ; la répartition molaire de halogénosilanes au sein des mélanges est calculée de manière à des organopolysiloxanes ayant un rapport R/Si s'étalant de 1,60 à 1,95. Plus précisément sont hydrolysés des mélanges renfermant les silanes de formules $RSiCl_3$ et $R_2SiCl_2$ ou de formules $RSiCl_3$ et $R_3SiCl$ ou de formules $RSiCl_3$, $R_2SiCl_2$ et $R_3SiCl$.

L'hydrolyse a lieu généralement à des températures comprises entre 0 °C et 60 °C, dans un excès molaire d'eau (par rapport aux atomes-gramme de chlore liés aux atomes de silicium), en présence ou non de solvants. Elle peut être exécutée en marche discontinue, en introduisant simultanément et séparément les chlorosilanes et de l'eau, dans un réacteur contenant une faible quantité d'hydrolysat ou bien, en marche continue. De préférence, sont hydrolysés des mélanges de méthylchlorosilanes. les hydrolisats, après séchage, peuvent être soumis à une dévolatilisation pour éliminer les polysiloxanes de faibles masses moléculaire et/ou réarrangés par chauffage sur des catalyseurs acides ou basiques pour ajuster le taux d'hydroxyle et la viscosité.

Pour obtenir des revêtements ayant de bonnes propriétés d'antiadhérence, on mettra en œuvre des compositions organosiliciques dont le polymère organopolysiloxanique B) est tel que ses motifs correspondent à un symbole R représentant des radicaux méthyle, éthyle, n-propyle, vinyle, au moins 90 % de ces radicaux étant des radicaux méthyle, au plus 5 % de ces radicaux étant des radicaux vinyle.

Les agents à groupements polyalkoxysilylés également désignés sous l'expression agents réticulants ou réticulants et utilisables dans le cadre de la présente invention, peuvent être de nature très variée : il peut s'agir de tout composé à groupement alkoxysilylé tel que les polyalkoxysilanes, les polyalkoxysiloxanes, les polyalkoxypolysiloxanes, les silicates ou les polysilicates.

Les agents réticulants peuvent être, en particulier, des composés monomères de formule (II) ou (III) :

$$R'_aSi[OR'']_{4-a} \qquad (II)$$

$$R'_aSi[(OCH_2—CH_2)_bOR'']_{4-a} \qquad (III)$$

dans lesquelles le symbole R' représente un radical méthyle, éthyle, n-propyle vinyle, phényle, le symbole

R″ représente un radical méthyle, éthyle, le symbole a représente zéro ou 1, et le symbole b représente 1 ou 2.

Les agents réticulants peuvent être des composés disiloxaniques ou polymériques (silicates, polysilicates, polyalkopolysiloxanes) résultant de l'hydrolyse partielle de monomères de formule $Si(OR'')_4$ et/ou $R'Si(OR'')_3$. On peut évidemment associer à ces divers monomères, lors de l'hydrolyse partielle des composés difonctionnels tels que $R'_2Si(OR'')_2$.

On peut, en outre, utiliser dans le cadre de la présente invention un mélange d'agents réticulants du type monomère ou polymère.

A titre illustratif, on citera parmi les agents réticulants alkoxylés les divers composés suivants :

le méthyltriméthoxysilane,
le méthyltriéthoxysilane,
le méthyltriisopropoxysilane,
le chlorométhyltriméthoxysilane,
le chlorométhyltriéthoxysilane,
le fluorométhyltriéthoxysilane,
le méthyltris-(β-méthoxyéthoxy)silane,
l'éthyltriméthoxysilane,
l'éthyltriéthoxysilane,
le n-propyltriméthoxysilane,
le n-propyltris-(β-méthoxyéthoxy)silane,
le pentafluoro-4,4,4,3,3 butyltriméthoxysilane,
l'hexyltriméthoxysilane,
l'éthyl-2 hexyltriméthoxysilane,
le vinyltriméthoxysilane,
le vinyltriéthoxysilane,
l'allyltriméthoxysilane,
le butène-2 yl triéthoxysilane,
le dichloro-2,2 cyclopropyltriéthoxysilane,
le difluoro-2,2 cyclopropyltriéthoxysilane,
le cyclopentyltriméthoxysilane,
le cyclohexyltriéthoxysilane,
le diméthyl-2,3 cyclohexyltriméthoxysilane,
le phényltriméthoxysilane,
le phényltris(β-méthoxyéthoxy)silane,
le trichlorophényltriméthoxysilane,
le tétrachlorophényltriéthoxysilane,
le (chlorométhyl)méthyldiméthoxysilane,
le (chloro-méthyl)méthyldiéthoxysilane,
le diméthyldiméthoxysilane,
le méthyl(n-propyl)diméthoxysilane,
le (dichloro-2,2 cyclopropyl)méthyldiméthoxysilane
le (difluoro-2,2 cyclopropyl)méthyldiéthoxysilane,
le (dichloro-2,2 cyclopropyl)méthyldiéthoxysilane,
le (fluorométhyl)méthyldiéthoxysilane,
le (fluorométhyl)méthyldiméthoxysilane,
le silicate de méthyle,
le silicate d'éthyle,
le silicate de propyle,
le silicate d'isopropyle,
le silicate de butyle,
le silicate de β-méthoxyéthyle,
le silicate de β-éthoxyéthyle,
les silicates mixtes de méthyle et d'éthyle,
les silicates mixtes de méthyle et de butyle.

Les polymères qui peuvent être obtenus par l'hydrolyse partielle des silicates de formule $Si(OR'')_4$ (silicates de méthyles, d'éthyle, de propyle, de butyle, silicates mixtes de méthyle et d'éthyle) sont habituellement appelés polysilicates et sont constitués en majeure partie de motifs de formule $OSi(OR'')_2$ et d'une faible proportion de motifs de formules $(R''O)_3SiO_{0,5}$, $R''OSiO_{1,5}$ et $SiO_2$. Pour caractériser ces polymères, on se base habituellement sur leur teneur en groupes alkoxyles ou en silice, de préférence on les caractérise par leur teneur en silice car il est souvent plus aisé de doser la silice (par hydrolyse totale d'un échantillon) que les groupes alkoxyles. Leurs méthodes de préparation sont bien connues, elles sont décrites en particulier dans l'ouvrage « Chemistry and Technology of Silicones » de W. Noll — pages 648 à 653.

On utilisera de manière préférentielle des réticulants de formules :

$Si(OCH_2CH_2OCH_3)_4$, $Si(OCH_2CH_2CH_2OC_2H_5)_4$,
$Si(OCH_2CH_2OCH_2CH_2OCH_3)_4$,
$CH_3Si(OCH_2CH_2OCH_3)_3$,
$CH_3Si(OCH_2CH_2OCH_2CH_2OCH_3)_3$,
$CH_3Si(OCH_2CH_2OC_2H_5)_3$,
$C_2H_5Si(OCH_2CH_2OCH_3)_3$,
$(nC_3H_7)Si(OCH_2CH_2OCH_3)_3$,
$CH_2 = CHSi(OCH_2CH_2OCH_3)_3$,
$CH_2 = CHSi(OCH_2CH_2OC_2H_5)_3$,
$CH_2 = CHSi(OCH_2CH_2OCH_2CH_2OCH_3)_3$,
$C_6H_5Si(OCH_2CH_2OCH_3)_3$ .

De préférence, sont introduits dans les compositions de l'invention seuls ou en mélanges, les réticulants de formules

$Si(OCH_2CH_2OCH_3)_4$, $CH_3Si(OCH_2CH_2OCH_3)_3$,
$CH_2 = CHSi(OCH_2CH_2OCH_3)_3$,
$C_6H_5Si(OCH_2CH_2OCH_3)_3$.

Les divers constituants des compositions selon l'invention peuvent être introduits dans des proportions variées en fonction de l'application envisagée. En règle générale, les compositions selon l'invention comprennent :

100 parties du diorganopolysiloxane A
30 à 120 parties du polymère organopolysiloxane B
8 à 35 parties d'agent réticulant (composé C)
6 à 40 parties du système catalytique (composé D) constitué par une solution contenant de 1 à 10 % poids/poids d'un dérivé organique du fer ou du zirconium dans un solvant compatible avec le milieu polysiloxanique.

En dehors des ingrédients A, B, C et D, d'autres adjuvants peuvent être introduits dans les compositions organosiliciques, par exemple des huiles α,ω-bis(triorganosiloxy)doirganopolysiloxaniques de faible viscosité, allant, en général, de 0,5 à 200 mPa · s à 25 °C, qui servent à ajuster la viscosité des compositions conformes à l'invention. Ces huiles sont constituées essentiellement de motifs de formule $Z_2SiO$ et sont bloquées à chaque extrémité de leur chaîne par des motifs de formule $Z_3SiO_{0,5}$ ; les symboles Z, identiques ou différents, représentent les mêmes radicaux que ceux définis lors de la description des diorganopolysiloxanes A ; en outre, les pourcentages de radicaux méthyle, vinyle et phényle liés aux atomes de silicium des huiles sont identiques à ceux éventuellement attribués aux radicaux correspondants des diorganopolysiloxanes A.

Les huiles de blocage sont fabriquées à l'échelle industrielle. Par ailleurs, leur préparation peut avoir lieu en suivant le mode opératoire décrit pour la fabrication des polymères diorganopolysiloxaniques A), à condition toutefois que les quantités calculées d'eau soient remplacées par celles de bloqueurs de chaîne - bis(triorganosiloxy)diorganopolysiloxaniques de faible masse moléculaire ayant au plus 10 motifs diorganosiloxy. De tels bloqueurs peuvent répondre, par exemple, aux formules ci-après :

$(CH_3)_3SiOSi(CH_3)_3$
$(CH_3)_3Si[OSi(CH_3)_2]_4OSi(CH_3)_3$
$CH_2 = CHSi(CH_3)_2OSi(CH_3)_2CH = CH_2$

Ces huiles sont introduites à raison d'au plus 25 parties, de préférence de 4 à 20 parties, pour 100 parties des diorganopolysiloxanes A. On choisira préférentiellement les huiles α,ω-bis(triméthylsiloxy) diméthylpolysiloxaniques qui sont très accessibles industriellement.

D'autres additifs ou charges peuvent également être introduits, en particulier des agents servant à améliorer l'accrochage des compositions durcies sur divers supports cellulosiques ou synthétiques.

Ainsi il est recommandé d'ajouter aux ingrédients A, B, C et D, des époxysilanes choisis dans le groupe constitué de ceux de formules

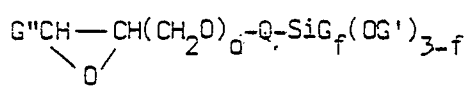

(et de formule)

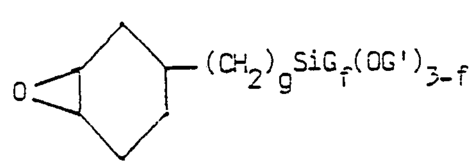

dans lesquelles le symbole G représente un groupe alcoyle ayant de 1 à 4 atomes de carbone, le groupe phényle ; le symbole G′ représente un groupe alcoyle ayant de 1 à 3 atomes de carbone, le groupe méthoxyéthyle, le symbole G″ représente un atome d'hydrogène, un groupe alcoyle ayant de 1 à 3 atomes de carbone ; le symbole Q représente un radical alcoylène ayant de 1 à 10 atomes de carbone ; le symbole f représente 0 ou 1 ; le symbole g représente 0 ou 2 ; le symbole d représente 0 ou 1.

A titre illustratif de radicaux alcoyles ayant de 1 à 4 atomes de carbone représentés par G peuvent être cités : les radicaux méthyle, éthyle, n-propyle, n-butyle.

A titre illustratif de radicaux alcoyles ayant de 1 à 3 atomes de carbone représentés par G′ et G″ peuvent être cités : les radicaux méthyle, éthyle, n-propyle, isopropyle.

A titre illustratif de radicaux alcoylènes ayant de 1 à 10 atomes de carbone représentés par Q, peuvent être cités ceux de formules

$-CH_2-$, $-(CH_2)_2-$, $(CH_2)_3$, 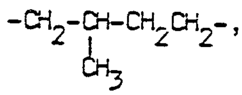,

$-(CH_2)_5$, $-(CH_2)_8-$

Plus spécifiquement, ces époxysilanes peuvent répondre aux formules ci-après qui montrent comment peuvent être associés les différentes significations de G, G′, G″, Q, d, f, g

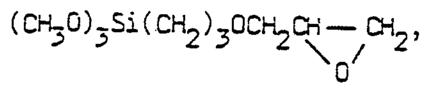,

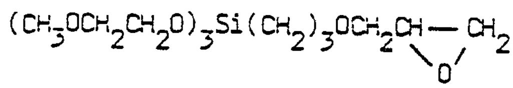

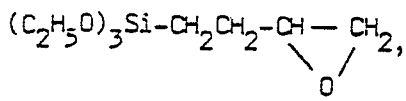,

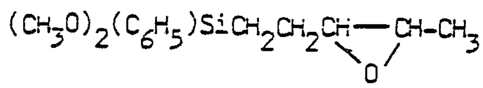

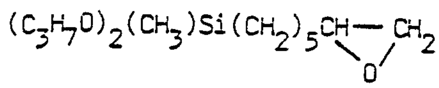

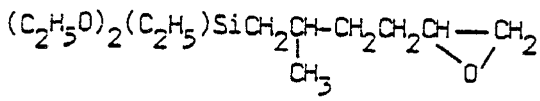

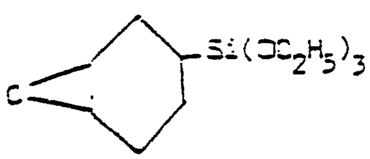

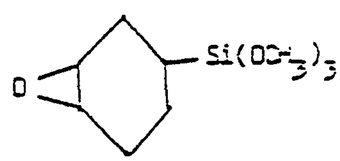

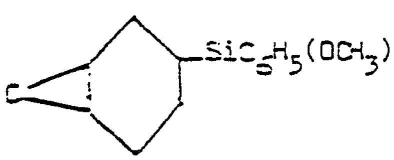

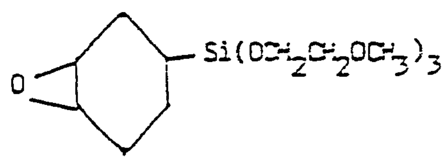

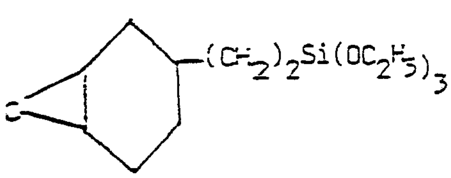

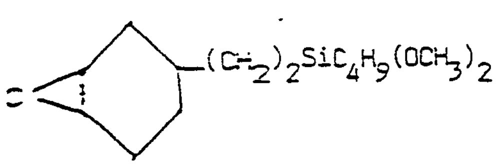

Les modes de préparation et le caractéristiques de ces époxysilanes sont décrits dans la littérature chimique et plus spécialement dans les brevets français 1 185 009, 1 526 291, 1 548 971. Ces époxysilanes sont introduits à raison d'au plus 8 parties, de préférence de 0,1 à 6 parties, pour 100 parties de diorganopolysiloxanes A. On choisira préférentiellement lesépoxysilanes ayant des groupes glycicoxypropyles liés aux atomes de silicium (ils répondent par exemple aux deux premières formules développées écrites ci-dessus), du fait qu'ils sont accessibles industriellement ou aisés à préparer.

Les compositions, selon l'invention, peuvent en outre contenir d'autres ingrédients divers, non encore mentionnés et utilisables dans l'art chimique considéré.

Les compositions, selon l'invention, peuvent être utilisées dans des applications autres que celles déjà mentionnées. Elles permettent, en effet, d'obtenir des produits de recouvrement tels que les vernis ou les peintures. Elles contiendront alors des pigments et éventuellement d'autres additifs tels que des agents antistructures, des stabilisants thermiques, des agents thixotropiques ou des inhibiteurs de corrosion.

Les compositions peuvent être préparées par simple mélange à la température ambiante des ingrédients A, B, C, D et éventuellement des additifs précédemment décrits.

L'ordre d'incorporation de ces ingrédients peut être quelconque, mais il est souvent plus pratique de mélanger tout d'abord les polymères A et B additionnés éventuellement des $\alpha,\omega$-bis(triorganosiloxy)-diorganopolysiloxanes, et d'ajouter ensuite les agents réticulants C, les systèmes catalytiques D et éventuellement les époxysilanes.

Ces compositions, abandonnées dans des récipients ouverts à l'air ambiant, sont stables pendant au moins 15 heures, à la température ambiante. Elles présentent donc l'avantage de ne pas gélifier dans les bacs d'enduction alimentant les machines industrielles d'enduction. Les produits industriels d'enduction en sont donc grandement facilités.

Pour leur stockage prolongé, il est cependant indispensable de conditionner les compositions en 2 parties qui seront mélangées avant emploi, l'une des 2 parties qui seront mélangées avant emploi, l'une des 2 parties pouvant renfermer les ingrédients A, B, C, et éventuellement les $\alpha,\omega$-bis(triorganosiloxy) diorganopolysiloxanes et les époxysilanes et l'autre les systèmes catalytiques D. Néanmoins, il peut être judicieux de mettre dans l'une des 2 parties, seulement les polymères A et B additionnés éventuellement des $\alpha,\omega$-bis(triorganosiloxy)diorganopolysiloxanes et dans l'autre partie, les réticulants C, les systèmes catalytiques D additionnés éventuellement des époxysilanes. Ce mode de conditionnement permet de faire varier plus aisément le rapport polymères/réticulants + systèmes catalytiques, en fonction des quantités de polymères que l'on désire déposer sur les supports à traiter.

Les compositions peuvent être utilisées, comme on l'a déjà dit, pour enduire ou imprégner des matériaux divers, tels que les matériaux métalliques, cellulosiques, synthétiques ou à base de fibres d'amiante.

Les compositions servant pour les revêtements sont déposées, par exemple, à l'aide de dispositifs, montés sur les machines industrielles, qui permettent d'étaler en couche mince, d'une façon uniforme, de faibles quantités de produits liquides. Parmi ces dispositifs peut être utilisé celui nommé « Hélioglissant », comportant principalement 2 cylindres superposés, tournant en sens inverse l'un de l'autre, à des vitesses différentes, dont le réglage permet de déposer les quantités désirées des compositions : le rôle du cylindre placé le plus bas, plongeant dans le bac d'enduction rempli de compositions, est d'imprégner le cylindre placé au-dessus de lui, ce dernier dépose alors sur les matériaux à traiter une couche uniforme de compositions.

Une fois déposées sur les supports, les compositions sont durcies en quelques secondes, par circulation des supports dans des fours-tunnels chauffés vers 60-200 °C. Le temps de passage dans ces fours varie de 2 à 30 s ; il est fonction pour une longueur donnée des fours, de la vitesse à laquelle circule ces supports enduits et de la température de durcissement. Ainsi des supports en matériaux cellulosiques peuvent circuler à la vitesse de 200 m/min, avec un temps de passage de 5 s dans un four porté à des températures de l'ordre de 170-200 °C, ou à la vitesse de 100 m/min, avec un temps de passage de 10 secondes dans le même four à une température de l'ordre de 120-160 °C.

Les quantités de compositions déposées sur les matériaux à traiter sont variables, selon l'application envisagée, et s'échelonnent, par exemple pour le papier, de 0,1 à 4 g/m$^2$ ; ces quantités dépendent de la nature des matériaux et des propriétés antiadhérentes recherchées. Ainsi les quantités déposées sur les supports non poreux (tels les papiers très raffinés traités par une couche-barrière, les feuilles en matière plastique) sont faibles et ne dépassent guère 1,5 g/m$^2$, de l'ordre de 0,3 à 1 g/m$^2$. Par contre, sur des supports poreux, il est indispensable pour obtenir le même degré d'antiadhérence de déposer des quantités nettement plus élevées de l'ordre de 1,2 à 2 g/m$^2$ et même au-dessus.

Les couches durcies des compositions confèrent aux supports sur lesquels elles sont accrochées de très bonnes propriétés hydrofugeantes, et le cas échéant antiadhérentes, qui se conservent dans le temps. De plus, ces couches durcies résistent bien au frottement, en particulier elles ne sont pas enlevées par abrasion, lors du passage des supports enduits sur les cylindres de renvoi des machines d'enduction ou d'adhésivation, cylindres constitués de matériaux dont les surfaces sont plus ou moins rugueuses.

Les compositions de l'invention peuvent ainsi être appliquées sur tous les matériaux qui seront ultérieurement en contact avec des substances libérant de l'humidité. Ces matériaux cellulosiques ou synthétiques, poreux ou non, comprennent donc les diverses variétés de papier, (comme le papier Kraft

dont le degré de raffinage peut être quelconque, le papier cristal, les papiers sulfurisés), les cartons, le parchemin végétal, les papiers enduits de polyéthylène ou de carboxyméthylcellulose, les feuilles en cellulose régénérée (comme la cellophane) ou en polyacétate de cellulose, les feuilles en matières plastiques telles celles en polyéthylène, polypropylène, polytéréphtalate d'éthylène, les feuilles en métal, les tissus à base de fibres synthétiques, de verre ou d'amiante, les matériaux fibreux non-tissés, qu'ils soient à base de fibres cellulosiques, ou de fibres synthétiques, ou d'un mélange de ces fibres.

Les matériaux rendus ainsi antiadhérents sont utilisés comme intercalaires, supports séparateurs, papiers et pellicules pour transferts, emballages de matières alimentaires libérant de l'humidité telles que le poisson, la viande, le fromage, ou collantes telles que la confiserie, la pâtisserie.

Les compositions selon l'invention peuvent servir pour imprégner des matériaux composites divers, à base d'amiante, de liège, de fibres cellulosiques et synthétiques. Elles ouvrent ainsi l'accès à la fabrication de joints divers, éventuellement antiadhérents et ayant une bonne tenue à l'eau et/ou aux hydrocarbures. Il doit être entendu que de bonnes propriétés d'antiadhérence seront obtenues en choisissant les compositions organopolysiloxaniques, en accord avec ce qui a été exposé précédemment.

Les exemples suivant illustrent l'invention.

Exemple n° 1

Dans un réacteur en verre, équipé d'un dispositif d'agitation, sont chargées :

55 parties d'une huile α,ω-dihydroxydiméthylpolysiloxanique de viscosité 750 mPa · s. à 25 °C

10 parties d'une huile α,ω-dihydroxydiméthylpolysiloxanique de viscosité 100 mPa · s. à 25 °C

35 parties d'une huile méthylpolysiloxanique de viscosité 15 mPa · s. à 25 °C constituée de 25 % constituée de 25 % de motifs $CH_3SiO_{1,5}$, 72,5 % de motifs $(CH_3)_2SiO$ et 2,5 % de motifs $(CH_3)_3SiO_{0,5}$, ayant 1,8 % en poids de groupes hydroxyles.

L'ensemble est agité pendant 10 minutes. Au contenu du réacteur sont alors ajoutées 20 parties d'un mélange homogène constitué de 5,5 partie de silane de formule $Si(OCH_2CH_2OCH_3)_4$, 4 parties du silane de formule $CH_3Si(OCH_2CH_2OCH_3)_3$, 0,5 partie du silane de formule

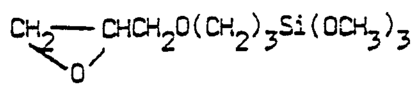

et 10 parties d'une solution à 5 % d'acétylacétonate ferrique de formule :

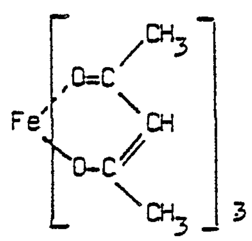

dans le diméthyléther du diéthylèneglycol de formule :

$$CH_3(OCH_2CH_2)_2OCH_3.$$

Le contenu du réacteur est de nouveau agité pendant 10 minutes. Il en résulte une composition limpide, prête à l'emploi, de viscosité 400 mPa · s à 25 °C. Cette composition est appliquée, à raison de 1 g/m², en une couche uniforme sur une face d'un papier Kraft pesant 85 g/m² (préparé à partir d'une pâte raffinée à 60° Shopper), surfacé par une couche-barrière en carboxyméthylcellulose et supercalandré.

Le dépôt de la composition est effectué à l'aide d'une tête d'enduction, du type Hélioglissant, montée sur une machine industrielle d'enduction du papier.

La couche déposée est durcie par passage du papier enduit, à la vitesse de 180 m/minute, dans un four-tunnel de la machine porté à 175 °C ; le temps de passage du papier est de 5 secondes.

Sur la face du papier recouverte d'un fin revêtement de silicone durcie sont déposés, au moyen d'une couleuse, 60 g/m² d'une solution à 40 % dans l'acétate d'éthyle, d'un polymère acrylique adhésif commercialisé sous le nom de marque SOLURON A 1030 E. Le papier, recouvert de la solution d'adhésif, est placé pendant 3 minutes dans une étuve ventilée portée à 130 °C puis abandonné 15 minutes à la température ambiante. Il reste sur le papier une couche de 24 g/m² d'adhésif.

Sur cette couche est appliqué un film en polytéréphtalate d'éthylène. Il est maintenu en place pendant 24 heures, sous une pression de 24 g/cm². Au bout de cette période, la force nécessaire pour décoller le film du papier est mesurée ; le décollement est exécuté à l'aide d'un dynamomètre dont l'une des 2 mâchoires, qui est fixe, retient le papier, et l'autre tire sur une extrémité du film, repliée de 180 °C, à la vitesse de 25 cm/minute. On trouve une force de décollement très faible, à savoir de 2,5 g pour une largeur du film de 1 cm.

Exemple n° 2

Dans un réacteur en verre, équipé d'un dispositif d'agitation, sont chargées :

45 parties d'une huile α,ω-di(hydroxy)méthylvinylpolysiloxanique constituée de 95 % de motifs $(CH_3)_2SiO$ et 5 % de motifs $CH_3(CH_2{=}CH)SiO$, de viscosité 500 mPa · s à 25 °C

45 parties d'une huile méthylpolysiloxanique de viscosité 75 mPa · s à 25 °C, constituée de 25 % de motifs $CH_3SiO_{1,5}$, 72,5 % de motifs $(CH_3)_2SiO$ et 2,5 % de motifs $(CH_3)_3SiO_{0,5}$, ayant 1,8 % en poids de groupes hydroxyles

10 parties du silane de formule $CH_2{=}CHSi(OCH_2CH_2OCH_3)_3$

L'ensemble est agité pendant 20 minutes. Au contenu du réacteur sont alors ajoutées 10 parties d'une solution à 5 % d'acétylacétonate ferrique de formule :

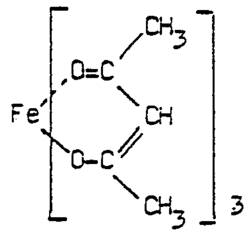

dans un mélange de solvants organiques, ce mélange étant constitué d'orthodichlorobenzène et de diméthyléther du diéthylèneglycol, de formule $CH_3(OCH_2CH_2)_2OCH_3$ dans le rapport pondéral 50/50.

Le contenu du réacteur est agité pendant 10 minutes : il en résulte la formation d'une composition limpide, de viscosité 250 mPa · s à 25 °C. Cette composition est appliquée, à raison de 1,2 g/m², en une couche uniforme, sur la face lissée d'un papier Kraft écru, pesant 70 g/m², (préparée à partir d'une pâte raffinée à 45° Shopper), surfacé par une couche-barrière à base d'amidon et frictionné.

Le dépôt de la composition est effectué comme indiqué à l'exemple 1. La couche déposée est ensuite durcie par passage du papier enduit, à la vitesse de 90 m/minute dans un four-tunnel de la machine porté à 150 °C ; le temps de passage du papier est de 10 secondes. Ensuite, on détermine le caractère antiadhérent, vis-à-vis des adhésifs, de la face du papier recouverte du revêtement en silicone, en opérant selon le processus décrit à l'exemple 1 : dépôt d'une couche de 24 g/m² de l'adhésif acrylique, application sur l'adhésif ou film en polytéréphtalate d'éthylène et maintien de cette application pendant 24 heures, finalement décollement du film.

On trouve une force de décollement de 3,5 g pour une largeur de film de 1 cm.

Exemple n° 3

Dans un réacteur en verre équipé d'un dispositif d'agitation sont chargées :

30 parties d'une huile α,ω-dihydroxyméthylpolysiloxanique, de viscosité 750 mPa · s, à 250 °C.

10 parties d'une huile α,ω-dihydroxyméthylpolysiloxanique, de viscosité 100 mPa · s, à 250 °C.

40 parties d'une huile méthylpolysiloxanique, de viscosité 50 mPa · s, à 25 °C, constituée de 25 % de motifs $CH_3SiO_{1,5}$, 72,5 % de motifs $(CH_3)_2SiO$ et 2,5 % de motifs $(CH_3)_3SiO_{0,5}$ ayant 1,8 % en poids de groupes hydroxyles.

10 parties de silicate de méthylglycol $Si(—O—CH_2—CH_2—O—CH_3)_4$.

L'ensemble est agité pendant 20 minutes. Au contenu du réacteur sont ajouté 10 parties d'une solution à 5 % d'acétylacétonate ferrique de formule :

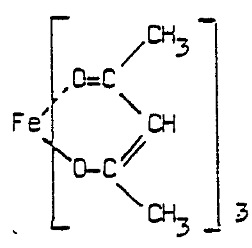

dans l'éther diméthylique du diéthylèneglycol

$$CH_3(—O—CH_2—CH_2—)_2O—CH_3$$

Le contenu du réacteur est à nouveau agité pendant 10 minutes. Il en résulte la formation d'une solution limpide, de viscosité de 100 mPa · s, à 25 °C et présentant une stabilité supérieure à 24 heures.

Cette composition est utilisée pour imprégner un composite constitué d'une âme métallique insérée entre des cartons d'amiante prétraité ou non avec des résines de type formophénolique, époxy, nitrile).

Cette imprégnation est réalisée plein bain, en 1 minute, suivie d'un égouttage de 1 minute et d'un essorage entre cylindres.

La polymérisation est assurée par passage du complexe enduit dans un four-tunnel ventilé, 30 secondes, à 150 °C.

Le joint ainsi traité présente d'excellentes propriétés d'antiadhérence, vis-à-vis du métal à chaud et sous pression (testé par exemple à 150 °C, sous 250 kg/cm², pendant 4 heures). De plus, ce joint présente de très bonnes performances d'hydrofugation et de tenue aux huiles à chaud et sous pression (supérieur à 5 kg/cm² à 100 °C).

Exemple n° 4

On effectue un essai analogue à l'exemple 3, en préparant une composition, en remplaçant simplement les 10 parties de solution, à 5 % d'acétylacétonate ferrique, dans l'éther diméthylique du diéthylèneglycol, par 10 parties d'une solution à 5 % d'acétylacétonate ferrique, dans l'éther diméthylique du diéthylèneglycol, par 10 parties d'une solution à 5 % d'octoate de zirconium, dans l'acétate d'éthylglycol.

Cette composition est utilisée pour préparer un joint, selon un procédé analogue à celui décrit à l'exemple 3. Le durcissement est assuré par passage, durant 60 secondes, dans un four-tunnel, porté à 150 °C. Ce joint présente d'excellentes propriétés andiadhérentes, hydrofugeantes et de résistance aux huiles à chaud et sous pression.

**Revendications**

1. Compositions organopolysiloxaniques de revêtement et d'imprégnation comprenant :

un polydiorganopolysiloxane α,ω-dihydroxylé (polymère A), de viscosité mesurée à 25 °C comprise entre 5 et 100 000 mPa · s constitué essentiellement de motifs de formule $Z_2SiO$, dans laquelle les symboles Z, identiques ou différents, représentent :

des radicaux alcoyles ou halogénoalcoyles ayant de 1 à 8 atomes de carbone et comportant de 1 à 7 atomes de chlore et/ou de fluor,

des radicaux alcényles ayant de 2 à 4 atomes de carbone,

des radicaux cycloalcoyles ou halogénocycloalcoyles ayant de 3 à 8 atomes de carbone et contenant de 1 à 4 atomes de chlore et/ou de fluor,

des radicaux aryles,alcoylaryles et haloghénoaryles ayant de 6 à 8 atomes de carbone et contenant de 1 à 4 atomes de chlore et/ou de fluor,

des radicaux cyanoalkyles ayant de 3 à 4 atomes de carbone,

un polyorganopolysiloxane (polymère B) ayant de 1,60 à 1,90 radical organique par atome de silicium, de viscosité allant de 30 mPa · s à 25 °C à 3 000 mPa · s à 25 °C, ayant de 0,2 à 10 % de groupes hydroxyles, constitué de motifs choisis parmi ceux de formules $RSiO_{1,5}$, $R_2SiO$ et $R_3SiO_{0,5}$, dans lesquelles les symboles R, identiques ou différents, représentent :

des radicaux alcoyles ou halogénoalcoyles ayant de 1 à 8 atomes de carbone et comportant de 1 à 7 atomes de chlore et/ou de fluor,

des radicaux alcényles ayant de 2 à 4 atomes de carbone,

des radicaux cycloalcoyles ou halogénocycloalcoyles ayant de 3 à 8 atomes de carbone et contenant de 1 à 4 atomes de chlore et/ou de fluor,

des radicaux aryles, alcoylaryles et halogénoaryles ayant de 6 à 8 atomes de carbone et contenant de 1 à 4 atomes de chlore et/ou fluor,

des radicaux cyanoalkyles ayant de 3 à 4 atomes de carbone,

un agent réticulant à groupement polyalkoxysilylé,

un catalyseur,

les compositions étant caractérisées en ce qu'elles sont sans solvant, en ce que le catalyseur est un dérivé organique du fer ou du zirconium introduit, sous forme d'une solution, dans un solvant organique compatible avec le milieu organopolysiloxanique, et en ce que les compositions sont exemptes de charges permettant de renforcer les propriétés mécaniques.

2. Compositions selon la revendication 1, caractérisées en ce que le dérivé organique du fer ou du zirconium est choisi parmi un sel d'acide carboxylique, un chélate ou un complexe organométallique.

3. Compositions selon la revendication 2, caractérisées en ce que le dérivé organique du fer est un complexe organométallique de formule :

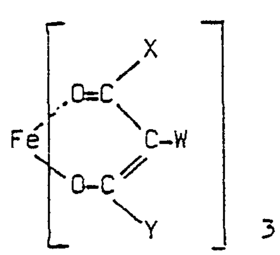

dans laquelle le symbole X représente un atome d'hydrogène, un radical alcoyle ayant de 1 à 4 atomes de carbone tel qu'un radical méthyle, éthyle, n-propyle, n-butyle, un radical phényle, un radical alkoxyle ayant de 1 à 3 atomes de carbone tel qu'un radical méthoxyle, éthoxyle, n-propoxyle, le symbole W représente un atome d'hydrogène, un radical méthyle, un radical acétyle, le symbole Y représente un radical méthyle, un radical phényle.

4. Compositions selon l'une quelconque des revendications précédentes, caractérisées en ce que le solvant du dérivé organique du fer ou du zirconium est choisi parmi :

(i) les dérivés des monoéthylèneglycols de formule $TO—CH_2CH_2OT$ dans laquelle les symboles T, identiques ou différents, représentent des radicaux de formule $CH_3CO$, des radicaux méthyle, éthyle, n-propyle, n-butyle,

(ii) les dérivés des diéthylèneglycols de formule $T'O(CH_2CH_2O)T'$, dans laquelle les symboles T', identiques ou différents représentent des radicaux de formule $CH_3CO$, des radicaux méthyle, éthyle (étant entendu que les symboles R' ne peuvent pas représenter simultanément des radicaux $CH_3CO$), liquides à la température ambiante,

(3i) les hydrocarbures aromatiques de formule :

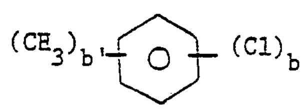

dans laquelle le symbole b représente 1 ou 2, le symbole b' représente zéro ou 1.

5. Compositions selon l'une des revendications 1 à 4 caractérisées en ce que :

le polydiorganopolysiloxane (polymère A) est essentiellement constitué de motifs de formule $Z_2SiO$, dans laquelle Z identique ou différent représente des radicaux méthyle, éthyle, n-propyle, vinyle, phényle, au moins 85 % de ces radicaux sont des radicaux méthyle, au plus 10 % de ces radicaux sont des radicaux phényle et au plus 5 % de ces radicaux sont des radicaux vinyle,

le polyorganopolysiloxane (polymère B) est tel que ses divers motifs correspondent à un symbole R représentant des radicaux méthyle, éthyle, n-propyle, vinyle, au moins 90 % de ces radicaux étant des radicaux méthyle, au plus 5 % de ces radicaux étant des radicaux vinyle.

6. Compositions selon l'une des revendications précédentes, caractérisées en ce qu'elles contiennent :

100 parties du diorganopolysiloxane A,

30 à 120 parties du polymère organopolysiloxane B,

8 à 35 parties d'agent réticulant (composé C),

6 à 40 parties du système catalytique (composé D) constitué par une solution contenant de 1 à 10 % poids/poids d'un dérivé organique du fer ou du zirconium dans un solvant compatible avec le milieu polysiloxanique.

7. Compositions selon l'une des revendications précédentes, caractérisées en ce qu'elles contiennent des époxysilanes choisis dans le groupe constitué de ceux de formules :

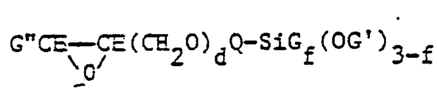

et de formule :

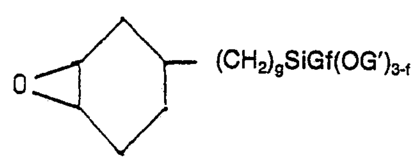

dans lesquelles les symboles G représentent des radicaux méthyle, éthyle, n-propyle, n-butyle, des radicaux phényle, les symboles G' représentent des radicaux méthyle, éthyle, n-propyle, isopropyle, des radicaux β-méthoxyéthyle, les symboles G" représente un atome d'hydrogène, un radical méthyle, éthyle, n-propyle, les symboles Q représentent un radical alcoylène ayant de 1 à 10 atomes de carbone, les symboles f représentent 0 ou1, le symbole g représente zéro ou 2, le symbole d représente zéro ou 1.

8. Utilisation des compositions, telles que définies à l'une quelconque des revendications précédentes, pour le revêtement ou l'imprégnation des matériaux à base d'amiante, de dérivés cellulosiques ou de matières synthétiques en vue de rendre lesdits matériaux anti-adhérent et/ou hydrofuges.

## Claims

1. Organopolysiloxane coating and impregnating compositions comprising :

an α,ω-dihydroxypolydiorganopolysiloxane (polymer A) with a viscosity, measured at 25 °C, of between 5 and 100,000 mPa · s, consisting essentially of units of formula $Z_2SiO$, in which formula the symbols Z, which are identical or different, denote :

alkyl or haloalkyl radicals containing from 1 to 8 carbon atoms and comprising from 1 to 7 chlorine and/or fluorine atoms,

alkenyl radicals containing from 2 to 4 carbon atoms,

cycloalkyl or cyclohaloalkyl radicals containing from 3 to 8 carbon atoms and containing from 1 to 4 chlorine and/or fluorine atoms,

aryl, alkylaryl and haloaryl radicals containing from 6 to 8 carbon atoms and containing from 1 to 4 chlorine and/or fluorine atoms,

cyanoalkyl radicals containing from 3 to 4 carbon atoms,

a polyorganopolysiloxane (polymer B) containing from 1.60 to 1.90 organic radicals per silicon atom, with a viscosity ranging from 30 mPa · s at 25 °C to 3 000 mPa · s at 25 °C, containing from 0.2 to 10 % of hydroxyl groups, and consisting of units chosen from those of formulae $RSiO_{1.5}$, $R_2SiO$ and $R_3SiO_{0.5}$, in which formulae the symbols R, which are identical or different, denote :

alkyl or haloalkyl radicals containing from 1 to 8 carbon atoms and comprising from 1 to 7 chlorine and/or fluorine atoms,

alkenyl radicals containing from 2 to 4 carbon atoms,

cycloalkyl or halocycloalkyl radical containing from 3 to 8 carbon atoms and containing from 1 to 4 chlorine and/or fluorine atoms,

aryl, alkylaryl and haloaryl radicals containing from 6 to 8 carbon atoms and containing from 1 to 4 chlorine and/or fluorine atoms,

cyanoalkyl radicals containing from 3 to 4 carbon atoms,

a crosslinking agent containing a polyalkoxysilyl group, and

a catalyst,

the compositions being characterized in that they are solvent-free, that the catalyst is an organic iron of zirconium derivative added, in the form of a solution, in an organic solvent which is compatible with the organopolysiloxane medium, and that the compositions are free from fillers permitting the mechanical properties to be reinforced.

2. Compositions according to Claim 1, characterized in that the organic iron or zirconium derivative is chosen from a carboxylic acid salt, a chelate or an organometallic complex.

3. Compositions according to Claim 2, characterized in that the organic iron derivative is an organometallic complex of the formula :

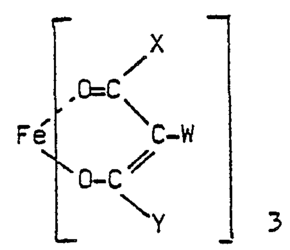

in which formula the symbol X denotes a hydrogen atom, an alkyl radical containing from 1 to 4 carbon atoms, such as a methyl, ethyl, n-propyl or n-butyl radical, a phenyl radical, an alkoxy radical containing from 1 to 3 carbon atoms, such as a methoxy, ethoxy or n-propoxy radical, the symbol W denotes a hydrogen atom, a methyl radical or an acetyl radical, and the symbol Y denotes a methyl radical or a phenyl radical.

4. Compositions according to any one of the preceding claims, characterized in that the solvent of the organic iron or zirconium derivative is chosen from :

(i) monoethylene glycol derivatives of the formula $TO—CH_2CH_2OT$, in which formula the symbols T, which are identical or different, denote radicals of formula $CH_3CO$, or methyl, ethyl, n-propyl or n-butyl radicals,

(ii) diethylene glycol derivatives of formula $T'O(CH_2CH_2O)T'$, in which formula the symbols T', which are identical or different, denote radicals of formula $CH_3CO$, or methyl or ethyl radicals (it being understood that the symbols R' (sic) cannot simultaneously denote $CH_3CO$ radicals), which are liquid at ambient temperature,

(iii) aromatic hydrocarbons of formula :

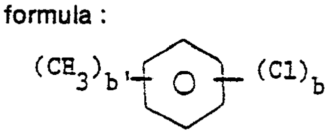

in which formula the symbol b denotes 1 or 2 and the symbol b' denotes zero or 1.

5. Compositions according to one of Claims 1 to 4, characterized in that :

the polydiorganopolysiloxane (polymer A) consists essentially of units of formula $Z_2SiO$, in which formula Z, which is identical or different, denotes methyl, ethyl, n-propyl, vinyl or phenyl radicals, at least 85 % of these radicals are methyl radicals, not more than 10 % of these radicals are phenyl radicals and not more than 5 % of these radicals are vinyl radicals,

the polyorganopolysiloxane (polymer B) is such that its various units correspond to a symbol R denoting methyl, ethyl, n-propyl or vinyl radicals, at least 90 % of these radicals being methyl radicals, and not more than 5 % of these radicals being vinyl radicals.

6. Compositions according to one of the preceding claims, characterized in that they contain :

100 parts of the diorganopolysiloxane A,

30 to 120 parts of the organopolysiloxane polymer B,

8 to 35 parts of a crosslinking agent (compound C),

6 to 40 parts of a catalytic system (compound D) consisting of a solution containing from 1 to 10 % weight/weight of an organic iron or zirconium derivative in a solvent which is compatible with the polysiloxane medium.

7. Compositions according to one of the preceding claims, characterized in that they contain epoxysilanes chosen from the group consisting of those of formulae :

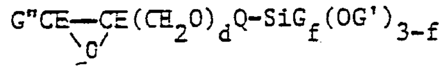

and of formula :

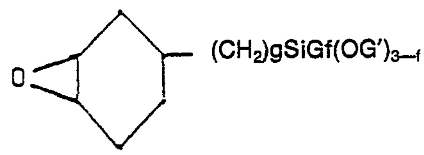

in which formulae the symbols G denote methyl, ethyl, n-propyl or n-butyl radicals or phenyl radicals, the symbols G′ denote methyl, ethyl, n-propyl or isopropyl radicals or β-methoxyethyl radicals, the symbol G″ denotes a hydrogen atoms, or a methyl, ethyl or n-propyl radical, the symbol Q denotes an alkylene radical containing from 1 to 10 carbon atoms, the symbols f denote 0 or 1, the symbol g denotes zero or 2, and the symbol d denotes zero or 1.

8. Use of the compositions, as defined in any one of the preceding claims, for coating or impregnating asbestosbased materials, cellulose derivatives or synthetic materials with a view to making the said materials nonadhesive and/or water-repellent.

**Patentansprüche**

1. Überzugs- und Imprägnierungs-Organopolysiloxan-Zusammensetzungen, umfassend

ein α,ω-dihydroxyliertes Polydiorganopolysiloxan (Polymeres A) mit einer Viskosität, gemessen bei 25 °C, zwischen 5 und 100 000 mPa · s, bestehend im wesentlichen aus Gruppierungen der Formel $Z_2SiO$, worin die Symbole Z, die identisch oder verschieden sind, bedeuten :

Alkyl- oder Halogenalkylreste mit 1 bis 8 Kohlenstoffatomen und mit 1 bis 7 Chlor- und/oder Fluoratomen,

Alkenylreste mit 2 bis 4 Kohlenstoffatomen,

Cycloalkyl- oder Halogencycloalkylreste mit 3 bis 8 Kohlenstoffatomen und enthaltend 1 bis 4 Chlor- und/oder Fluoratome,

Aryl-, Alkylaryl- und Halogenarylreste mit 6 bis 8 Kohlenstoffatomen und enthaltend 1 bis 4 Chlor- und/oder Fluoratome,

Cyanoalkylreste mit 3 bis 4 Kohlenstoffatomen,

ein Polyorganopolysiloxan (Polymeres B) mit 1,60 bis 1,90 organischen Rest je Siliciumatom mit einer Viskosität von 30 mPa · s bei 25 °C bis 3 000 mPa · s bei 25 °C, mit 0,2 bis 10 % Hydroxylgruppen, das besteht aus Gruppierungen, ausgewählt unter solchen der Formeln $RSiO_{1,5}$, $R_2SiO$ und $R_3SiO_{0,5}$, worin die Symbole R, die identisch oder verschieden sind, bedeuten :

Alkyl- oder Halogenalkylreste mit 1 bis 8 Kohlenstoffatomen und mit 1 bis 7 Chlor- und/oder Fluoratomen,

Alkenylreste mit 2 bis 4 Kohlenstoffatomen,

Cycloalkyl- oder Halogencycloalkylreste mit 3 bis 8 Kohlenstoffatomen und enthaltend 1 bis 4 Chlor- und/oder Fluoratome,

Aryl-, Alkylaryl- und Halogenarylreste mit 6 bis 8 Kohlenstoffatomen und enthaltend 1 bis 4 Chlor- und/oder Fluoratome,

Cyanoalkylreste mit 3 bis 4 Kohlenstoffatomen,

ein Vernetzungsmittel mit polyalkoxysilylierter Gruppierung,

einen Katalysator,

wobei die Zusammensetzungen dadurch gekennzeichnet sind, daß sie ohne Lösungsmittel sind, daß der Katalysator ein organisches Derivat des Eisens oder Zirkons ist, das in Form einer Lösung in einem organischen Lösungsmittel, das mit dem Organopolysiloxan-Milieu verträglich ist, eingeführt wird und daß die Zusammensetzungen frei von Füllstoffen sind, welche die mechanischen Eigenschaften zu verstärken erlauben.

2. Zusammensetzungen gemäß Anspruch 1, dadurch gekennzeichnet, daß das organische Derivat des Eisens oder des Zirkons ausgewählt ist unter einem Carbonsäuresalz, einem Chelat oder einem Organometallkomplex.

3. Zusammensetzungen gemäß Anspruch 2, dadurch gekennzeichnet, daß das organische Derivat des Eisens ein Organometallkomplex der Formel

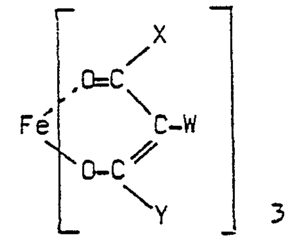

ist, worin das Symbol X ein Wasserstoffatom, einen Alkylrest mit 1 bis 4 Kohlenstoffatomen, wie einen Methyl-, Ethyl-, n-Propyl, n-Butyl-Rest, einen Phenylrest, einen Alkoxylrest mit 1 bis 3 Kohlenstoffatomen, wie einen Methoxy-, Ethoxy-, n-Propoxy-Rest, bedeutet, das Symbol W ein Wasserstoffatom, einen Methylrest, einen Acetylrest bedeutet, das Symbol Y einen Methylrest, einen Phenylrest bedeutet.

4. Zusammensetzungen gemäß einem der vorhergehenden Ansprüche, dadurch gekennzeichnet, daß das Lösungsmittel des organischen Derivats des Eisens oder des Zirkons ausgewählt ist unter:

(i) den Monoethylenglykol-Derivaten der Formel $TO—CH_2CH_2OT$, worin die Symbole T identisch oder verschieden sind und Reste der Formel $CH_3CO$, Methyl-, Ethyl-, n-Propyl-, n-Butylreste bedeuten,

(ii) den Diethylenglykol-Derivaten der Formel $T'O(CH_2CH_2O)T'$, worin die Symbole T', die identisch oder verschieden sind, Reste der Formel $CH_3CO$, Methyl-, Ethylreste (wobei die Symbole R' nicht gleichzeitig Reste $CH_3CO$ bedeuten können) darstellen, die bei Umgebungstemperatur flüssig sind,

(iii) den aromatischen Kohlenwasserstoffen der Formel

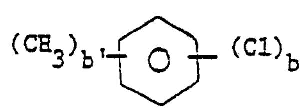

worin das Symbol b 1 oder 2 bedeutet, das Symbol b' 0 oder 1 bedeutet.

5. Zusammensetzungen gemäß einem der Ansprüche 1 bis 4, dadurch gekennzeichnet, daß

das Polydiorganopolysiloxan (Polymeres A) im wesentlichen aus Gruppierungen der Formel $Z_2SiO$ besteht, worin Z, das identisch oder verschieden ist, Methyl-, Ethyl-, n-Propyl-, Vinyl-, Phenylreste bedeutet, wobei wenigstens 85 % dieser Reste Methylreste sind, höchstens 10 % dieser Reste Phenylreste sind und höchstens 5 % dieser Reste Vinylreste sind,

das Polyorganopolysiloxan (Polymeres B) derart ist, daß seine verschiedenen Gruppierungen einem Symbol R entsprechen, das Methyl-, Ethyl-, n-Propyl-, Vinylreste bedeutet, wobei wenigstens 90 % dieser Rest Methylreste sind, höchstens 5 % dieser Reste Vinylreste sind.

6. Zusammensetzungen gemäß einem der vorhergehenden Ansprüche, dadurch gekennzeichnet, daß sie enthalten:

100 Teile Diorganopolysiloxan A,

30 bis 120 Teile des Organopolysiloxan-Polymeren B,

8 bis 35 Teile des Vernetzungsmittels (Verbindung C),

6 bis 40 Teile des katalytischen Systems (Verbindung D), das gebildet ist aus einer Lösung, enthaltend 1 bis 10 % Gewicht/Gewicht eines organischen Derivats des Eisens oder Zirkons in einem Lösungsmittel, das mit dem Polysiloxan-Milieu verträglich ist.

7. Zusammensetzungen gemäß einem der vorhergehenden Ansprüche, dadurch gekennzeichnet, daß sie Epoxysilane enthalten, ausgewählt aus der Gruppe, bestehend aus denjenigen der Formeln

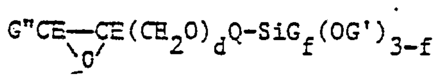

und der Formel:

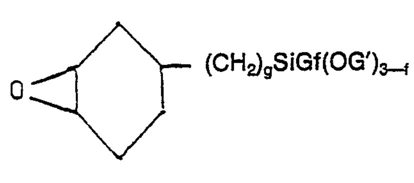

worin die Symbole G Methyl-, Ethyl-, n-Propyl-, n-Butyl-Reste, Phenylreste bedeuten, die Symbole G' Methyl-, Ethyl-, n-Propyl-, Isopropyl-, β-Methoxyethylreste bedeuten, die Symbole G" ein Wasserstoffatom, einen Methyl-, Ethyl-, n-Propylrest bedeuten, die Symbole Q einen Alkylenrest mit 1 bis 10

Kohlenstoffatomen bedeuten, das Symbol f 0 oder 1 darstellt, das Symbol g 0 oder 2 darstellt, das Symbol d 0 oder 1 darstellt.

8. Verwendung der Zusammensetzungen, wie sie in einem der vorhergehenden Ansprüche definiert sind, zum Überziehen oder Imprägnieren von Materialien auf Basis von Asbest, Cellulosederivaten oder synthetischen Materialien im Hinblick darauf, um diese Materialen antihaftend und/oder wasserabstoßend zu machen.